# EUROPEAN PATENT APPLICATION

(11) **EP 4 001 222 A2**
(43) Date of publication of application: **25.05.2022**
(21) Application number: 21208084.0
(22) Date of filing: 12.11.2021
(51) Int. Cl.: C02F 9/00, B01D 53/26, C02F 1/20, C02F 1/38, C02F 1/72, C02F 1/42, B64G 1/48, B64G 1/50, B64G 1/46, B01D 53/04, F24F 3/14, B01D 53/047

(54) **SPACE RATED ENVIRONMENTAL CONTROL AND LIFE SUPPORT SYSTEMS**

(30) Priority: 12.11.2020 US 202063112754 P
(71) Applicant: Hamilton Sundstrand Corporation, Charlotte, NC 28217-4578 (US)
(72) Inventor: GUYETTE, Gregory P., Windsor Locks, CT 06096 (US); KUNDROTAS, Robert E., North Granby, CT 06060 (US); DIONNE, Steven G., Willington, CT 06279 (US); SITLER, Glenn A., Southwick, MA 01077 (US); GARDNER, Benjamin D., Colton, CA 92324 (US); ROY, RObert J., West Springfield, MA 01089 (US)
(74) Representative: Dehns

(57) **Abstract**

A space habitat includes a water processing assembly including a wastewater tank (46) and a water processing section (48) connected to the wastewater tank. The water processing section includes a pump (52) to urge flow of the wastewater, a mostly liquid separator to separate gas from liquid in the wastewater, a catalytic reactor (68) located downstream of the mostly liquid separator, and one or more sensors located downstream of the catalytic reactor to determine if the wastewater is sufficiently processed. A valve directs the wastewater to a water storage tank if the sensors determine that the wastewater is sufficiently processed, and direct the wastewater to the wastewater tank if the one or more sensors determine that the wastewater is not sufficiently processed. The space habitat further includes one or more of a carbon dioxide removal system (12), a trace contaminant removal system (16), a temperature and humidity control system (22) or a waste collection system (20).

## Description

### BACKGROUND

Exemplary embodiments pertain to the art of environmental control and life support systems for, for example, space stations or vehicles.

Space rated environmental control and life support systems include systems for, for example, CO₂ removal, water processing, temperature and humidity control, trace contaminant detection and control, smoke detection, air monitoring and waste control.

Traditional environmental control and life support systems for space applications require time consuming design and qualification processes, which greatly increase the costs of such systems. The commercial space market cannot support the cost of the traditional space design and qualification approach. In order to be viable, commercial space business products must be designed and qualified at significantly reduced costs.

### BRIEF DESCRIPTION

In one embodiment, a space habitat includes a water processing assembly for a space habitat including a wastewater tank configured to store a volume of wastewater for processing, and a water processing section connected to the wastewater tank. The water processing section includes a pump to urge flow of the wastewater through the water processing assembly, a mostly liquid separator configured to use centrifugal force to separate gas from liquid in the wastewater, a catalytic reactor located downstream of the mostly liquid separator and configured to remove volatile organics from the wastewater through oxidation at elevated temperature in an oxygen-rich environment, and one or more sensors located downstream of the catalytic reactor to determine if the wastewater is sufficiently processed. A three-way valve is configured to direct the wastewater to a water storage tank if the one or more sensors determine that the wastewater is sufficiently processed, and direct the wastewater to the wastewater tank if the one or more sensors determine that the wastewater is not sufficiently processed. The space habitat further includes one or more of a carbon dioxide removal system, a trace contaminant removal system, a temperature and humidity control system or a waste collection system.

Additionally or alternatively, in this or other embodiments a particulate filter is located between the mostly liquid separator and the catalytic reactor, the particulate filter configured to remove solid contaminants from the wastewater.

Additionally or alternatively, in this or other embodiments a multifiltration bed is located downstream of the particulate filter. The multifiltration bed is configured to remove nonvolatile impurities from the wastewater.

Additionally or alternatively, in this or other embodiments a membrane gas separator is located downstream of the catalytic reactor. The membrane gas separator is configured to remove free gas from the wastewater exiting the catalytic reactor.

Additionally or alternatively, in this or other embodiments an ion exchange bed is located downstream of the catalytic reactor. The ion exchange bed is configured to remove ionic components from the wastewater exiting the catalytic reactor.

Additionally or alternatively, in this or other embodiments one or more heaters are located upstream of the catalytic reactor to elevate a temperature of the wastewater entering the catalytic reactor.

Additionally or alternatively, in this or other embodiments the one or more heaters include one or more regenerative heat exchangers.

Additionally or alternatively, in this or other embodiments a microbial check valve is located between the three-way valve and the wastewater tank to prevent wastewater from the wastewater tank from backflowing through the three-way valve.

In another embodiment, a space habitat includes a carbon dioxide removal system, including two solid amine beds, a first valve manifold operably connected to a first end of each of the two solid amine beds, a second valve manifold operably connected to a second end of each of the two solid amine beds, and a process controller configured to selectably direct a process airflow over a first solid amine bed of the two solid amine beds, and selectably operate a second solid amine bed of the two solid amine beds in a regeneration mode to regenerate a carbon dioxide adsorption capacity of the second solid amine bed. The space habitat further includes one or more of a water processing assembly, a trace contaminant removal system, a temperature and humidity control system or a waste collection system.

Additionally or alternatively, in this or other embodiments the carbon dioxide is removed from the process airflow via adsorption by the first solid amine bed.

Additionally or alternatively, in this or other embodiments a cooling loop is operably connected to the first solid amine bed to remove the heat of adsorption from the first solid amine bed.

Additionally or alternatively, in this or other embodiments the cooling loop is connected to the first solid amine bed via the second valve manifold.

Additionally or alternatively, in this or other embodiments the second solid amine bed is regenerated by the application of vacuum and heat to the second solid amine bed.

Additionally or alternatively, in this or other embodiments a vacuum source is operably connected to the second solid amine bed via the first valve manifold.

Additionally or alternatively, in this or other embodiments a heating loop is operably connected to the second solid amine bed via the second valve manifold.

In yet another embodiment, a space habitat includes a temperature and humidity control system including an airflow passage having an airflow inlet and an airflow outlet. A condensing heat exchanger is located along the airflow passage through which an airflow is directed. The condensing heat exchanger is configured to condense moisture out of the airflow. A water separator is located downstream of the condensing heat exchanger. The water separator includes a microporous hydrophilic membrane to collect condensed moisture from the airflow. The space habitat further includes one or more of a water processing assembly, a carbon dioxide removal system, a trace contaminant removal system or a waste collection system.

Additionally or alternatively, in this or other embodiments a bypass passage extends from the airflow passage upstream of the condensing heat exchanger to selectably direct at least a portion of the airflow to the airflow outlet without passing through the condensing heat exchanger and the water separator.

Additionally or alternatively, in this or other embodiments a temperature control valve controls the airflow through the bypass passage.

Additionally or alternatively, in this or other embodiments the water separator is located at a corner or other change in direction of the airflow passage such that the condensed impinges onto the hydrophilic membrane.

Additionally or alternatively, in this or other embodiments the condensed moisture is urged through the hydrophilic membrane by a differential pressure across the hydrophilic membrane.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a space system, having an environmental control and life support system there at;
FIG. 2 is a schematic illustration of an embodiment of a CO₂ removal system;
FIG. 3 is a schematic illustration of an embodiment of a water processing assembly (WPA);
FIG. 4 is a schematic view of an embodiment of a trace contaminant removal system;
FIG. 5 is a schematic view of an embodiment of a temperature and humidity control system; and
FIG. 6 is a schematic view of an embodiment of a waste collection system.

### DETAILED DESCRIPTION

A detailed description of one or more embodiments of the disclosed apparatus and method are presented herein by way of exemplification and not limitation with reference to the Figures.

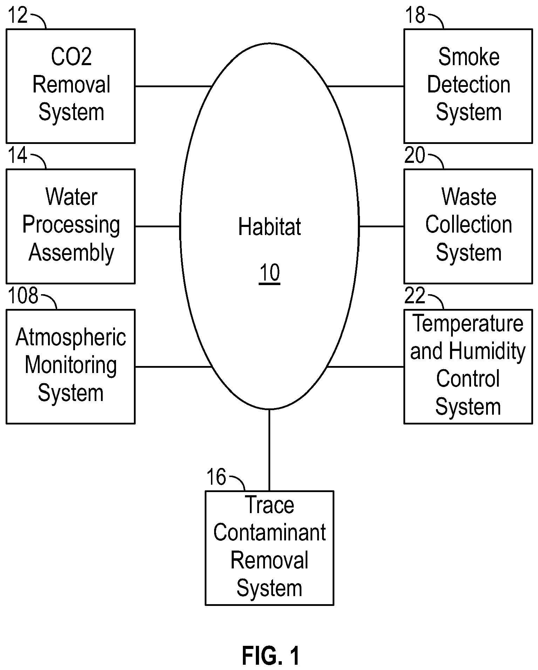

Referring to FIG. 1, illustrated is a schematic view of a space habitat 10, such as a space vehicle, space station or the like. The space habitat 10 includes one or more systems for environmental control of the space vehicle and for life support of passengers and/or crew of the space vehicle. The one or more systems includes a CO₂ removal system 12, a water processing assembly (WPA) 14, an atmospheric monitoring system (AMS) 108, a trace contaminant removal system 16, a smoke detection system 18, a waste collection system 20, and a temperature and humidity control system 22. Each of these systems will be described in more detail below.

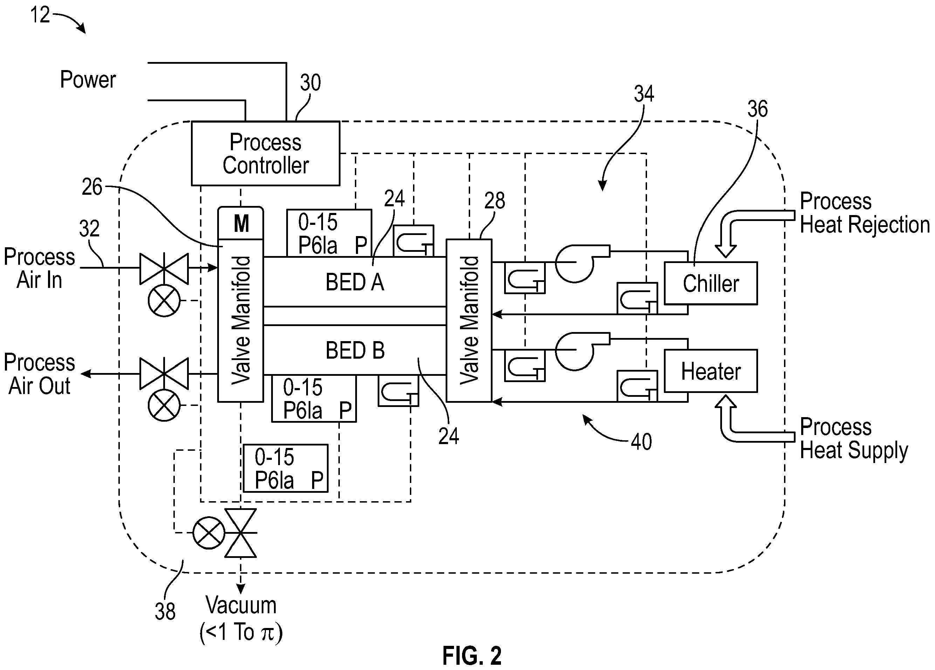

Referring to FIG. 2, illustrated is a schematic view of an embodiment of a CO₂ removal system 12. The CO₂ removal system includes two solid amine beds 24 connected to a first valve manifold 26 and a second valve manifold 28, which are each connected to the two solid amine beds 24. The first valve manifold 26 and the second valve manifold 28 are operably connected to a process controller 30, which selectably directs process air 32 into either of the solid amine beds 24 via the first valve manifold 26.

With the CO₂ removal system 12 having two amine beds 24, one of the amine beds 24 is configured for CO₂ adsorption, while the other of the amine beds 24 is configured for regeneration of its CO₂ adsorption capability. During CO₂ removal, process air 32 enters the first valve manifold 26 and is directed to one of the amine beds 24 for CO₂ removal from the process air 32 via adsorption by the amine bed 24. The amine bed 24 chemically fixates CO₂ in the process air 32. Active cooling removes the heat of chemisorption and maintains an amine bed temperature optimized for CO₂ adsorption Amine bed 24 cooling uses a pumped propylene glycol/water (PGW) loop 34 that picks up heat from the amine bed 24 and transfers it to the facility chilled water via a liquid-to-liquid shell and tube heat exchanger 36. The second valve manifold 28 selectably directs the fluid of the PGW loop 34 to the amine bed 24 to cool the amine bed 24. After adsorption of the CO₂ from the process air 32, the conditioned process air 32 exits the CO₂ removal system 12 via the first valve manifold 26.

While one solid amine bed 24 adsorbs CO₂ from process air, the solid amine in the other amine bed 24 regenerates its CO₂ adsorption capacity through a process of heat and vacuum. The first valve manifold 26 exposes the solid amine bed 24 to a vacuum source 38 (< 1mm Hg) while the second valve manifold 28 directs hot fluid from a heating loop 40 into the amine bed 24 jacketing. The process controller 30 synchronizes heating and vacuum pumping to minimize air loss while efficiently regenerating the amine bed 24. Once regeneration has completed, the amine bed 24 is cooled and the amine bed 24 functions are swapped through operation of the valve manifolds 26, 28 and process controller 30.

The two solid amine beds 24 cycle to allow continuous adsorption and regeneration. Transitions between adsorption and regeneration states may be determined by time durations and may be supervised by process controller 30. In operation, each amine bed 24 has multiple modes, including CO₂ uptake (adsorption), equilibrate and air save, heated desorb, passive desorb, cooled desorb, and equilibrate and isolate. Correct sequencing of these modes by the process controller 30 ensures sufficient CO₂ removal capacity and regeneration while respecting hardware limitations and adhering to system performance and safety requirements. The timing of each mode can be determined by, for example, ground testing and can be adjusted to accommodate other modes of operation, such as faulted modes of operation or modified crew size operations which may change air flow and power inputs.

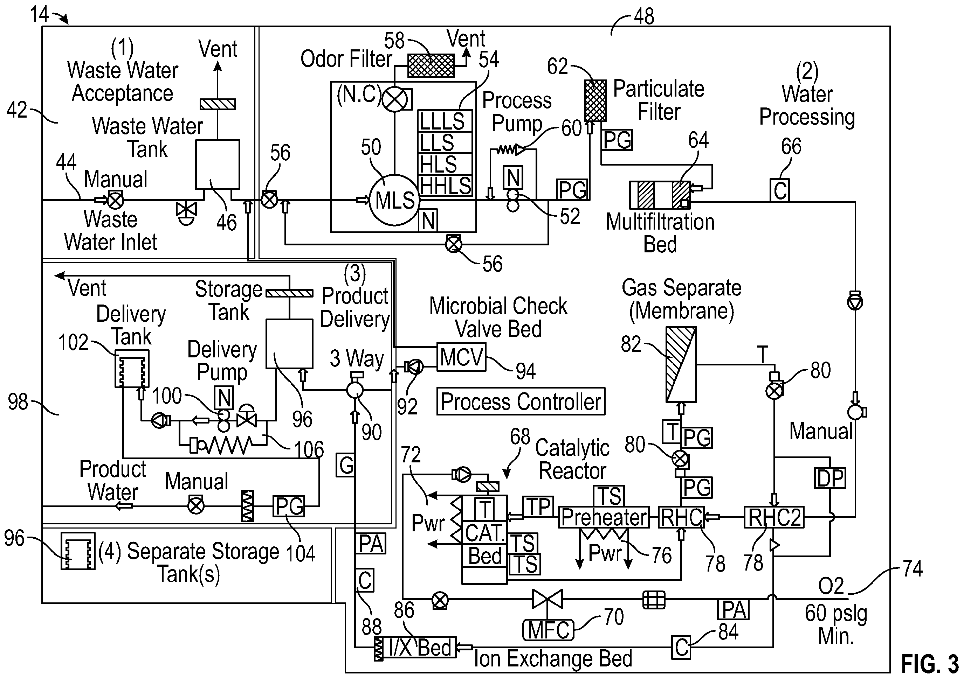

Referring now to FIG. 3, illustrated is an embodiment of a water processing assembly (WPA) 14. The WPA 14 receives wastewater from a variety of wastewater sources, including humidity condensate, carbon dioxide reduction water, and water obtained from fuel cells, reclaimed urine distillate, hand wash and oral hygiene wastewater. The wastewater contains gaseous, particulate, organic, inorganic, as well as bacterial contaminants. The WPA 14 removes these contaminants through a series of purification and quality monitoring steps to yield potable water for storage and delivery to a pressurized bus.

The WPA 14 includes four sections which are connected to define the WPA 14. The first section is a wastewater acceptance section 42, at which wastewater from a variety of sources enters the WPA 14 at a wastewater inlet 44 and is stored at a wastewater tank 46 for batch processing by the WPA 14. In some embodiments, the wastewater tank 46 has storage for about 75 liters per day of wastewater. Overall, in some embodiments the WPA 14 processes wastewater at a rate of about 7 liters per hour.

A second section of the WPA 14 is a water processing section 48 connected to the wastewater tank 46. The wastewater flows through a mostly liquid separator (MLS) 50. The MLS 50 removes free gas from the wastewater prior to the wastewater entering a process pump 52. The MLS 50 uses centrifugal force to separate gas and liquid in both terrestrial and microgravity environments. Level sensors 54 in the MLS 50 control the liquid level in the MLS 50 through a pair of valves 56 located between the MLS 50 and wastewater tank 46, and between an outlet of the process pump 52 to an inlet of the MLS 50. Gas separated from the wastewater at the MLS 50 passes through a charcoal filter 58 before being vented from the MLS 50 into the habitat.

The process pump 52 is located downstream of the MLS 50 and provides the head rise and flow to move the wastewater through the remainder of the processing section 48. A relief valve 60 at an outlet of the process pump 52 protects the system from overpressurization in the event of accidental pump dead heading.

A particulate filter 62 is located downstream of the process pump 52. The particulate filter 62 removes the particulate (solid) contaminants and protects a multifiltration bed 64 located downstream of the particulate filter 62. Pressure is monitored at an outlet of the particulate filter 62 to determine loading and of the particulate filter 62 and to monitor the particulate filter 62 performance for potential replacement. The multifiltration bed 64 removes nonvolatile impurities from the process water. A conductivity sensor 66 at an outlet of the multifiltration bed 64 monitors the multifiltration bed 64 for breakthrough signaling saturation of the multifiltration bed 64 and the need for replacement thereof.

A catalytic reactor 68, located downstream of the multifiltration bed 64 removes volatile organics from the process water through oxidation at elevated temperature in an oxygen-rich environment. Oxygen flow to the catalytic reactor 68 is controlled by a mass flow controller 70, which requires an oxygen supply of 60 psig minimum from an O₂ source 74. The catalytic reactor 68 is maintained at a selected temperature by a suite of heaters 72 while the incoming process water is heated up via an inline heater 76 and a pair of regenerative heat exchangers (RHXs) 78. The elevated temperature of the catalytic reactor 68 also serves to kill bacteria and viruses in the process water stream.

Downstream of the catalytic reactor 68, the system is sterile. The catalytic reactor 68, maintained at elevated temperature at all times, serves as the "sterile barrier," preventing biological contamination from entering the downstream product water. Pressure in the catalytic reactor 68 portion of the system is monitored and maintained to prevent boiling.

Water exits the catalytic reactor 68 as a two-phase gas / liquid mixture. Upon exiting the catalytic reactor 68, the processed water passes through RHX₂ 78, where the temperature is reduced and subsequently through a regulator 80 where the pressure is reduced. This two-phase flow then enters a membrane gas separator 82 to remove the free gas. In venting this free gas, a small amount of water escapes the system in the form of vapor. However, this vapor will again be condensed from the habitable atmosphere via the temperature and humidity control system 22 and returned to the WPA 14 for reprocessing. Net processing efficiency is essentially 100%.

The process water stream now passes through a second regulator 80 and RHX₁ 78 where the pressure is further reduced and the temperature is reduced to near room temperature. A conductivity sensor 84 downstream of RHX₁ 78 is used to monitor the health of the catalytic reactor 68. Presence of elevated levels of ionic species at this point in the system, would signal that the performance of the catalytic reactor 68 has been compromised.

The process stream next passes through an ion exchange (IX) bed 86 which removes ionic products from the process water exiting the catalytic reactor 68 and iodinates the process water to provide residual disinfection in the final portion of the bed. A conductivity sensor 88 at the IX bed 86 outlet determines the adequacy of the ion exchange. If the conductivity is high or if the catalytic reactor health conductivity sensor 84 indicates poor catalytic reactor 68 performance, a three-way valve 90 recycles the water back to the wastewater tank 46 where it can be reprocessed. A check valve 92 and MCV (Microbial Check Valve) bed 94 in this bypass line acts as a mechanical and microbial barrier to prevent the wastewater from contaminating the processed water. If both conductivity readings fall within acceptable limits, the three-way valve 90 directs the processed water for storage in a product water storage tank 96 in the product delivery section 98. Potable water is now ready for delivery to the customer interface.

Downstream of the product water storage tank 96, a pump 100, gas charge pressurized delivery tank 102, and pressure sensor 104 serve to deliver water as needed to maintain pressure within prescribed limits. A relief valve 106 at the pump 100 outlet protects the system from over pressurization in the event of accidental pump dead heading. In some embodiments, additional product water storage tanks 96 may be provided, separate and disconnected from the other components of the WPA 14.

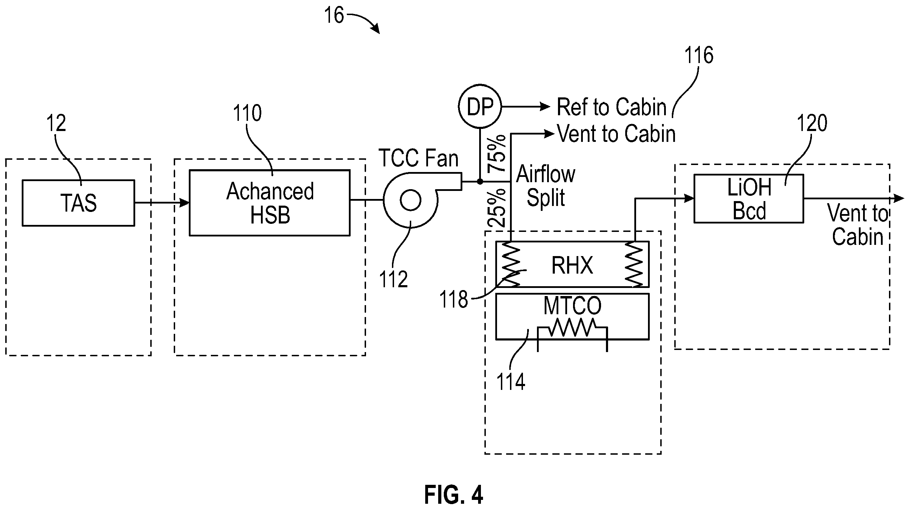

Referring now to FIG. 4, shown is a schematic view of an embodiment of a trace contaminant removal system 16. The trace contaminant removal system 16 is located downstream of the CO₂ removal system 12. Airflow entering the trace contaminant removal system 16 first passes through a hybrid sorbent bed (HSB) 110. In some embodiments, the HSB 110 contains multiple sorbents, to improve efficiency at more than one contaminant. The HSB 110 uses a sorbent technology including an advanced ammonia sorbent and a charcoal sorbent for other organic contaminants. This dual-sorbent bed increases removal capability for ammonia and organic contaminants while reducing the required sorbent bed volume.

A fan 112 is located downstream of the HSB 110. This location of the fan 112 reduces acoustic noise because inlet and outlet duct borne noise will be muffled by the HSB 110 and a downstream moderate temperature catalytic oxidizer (MTCO) 114. The airflow splits immediately downstream of the fan 112 and returns most of the air flow stream to the cabin 116 without further treatment, directing the remainder to the MTCO 114. Splitting the flow improves MTCO 114 efficiency by optimizing the residence time of the remaining airflow.

The MTCO 114 oxidizes low-molecular weight contaminants that were not adsorbed in the ammonia sorbent bed of the HSB 110. The MTCO 114 requires an electric heater (not shown) to achieve its 300°C operating temperature. The MTCO 114 catalyst is engineered with high metal loading of nano particles well dispersed onto a high porous inert support to achieve high catalytic activity and hydrocarbon oxidation efficiency. Using this technology enhances the removal capability of the MTCO 114. Moderate temperature operation also saves energy, reduces risk of reactor seal failure, and extends the reactor life. The MTCO 114 employs a regenerative heat exchanger (RHX) 118 to conserve power and prevent excess heat from being exhausted to the cabin. The MTCO 114 generates a small amount of CO₂ by oxidizing CO and this CO₂ must either be scrubbed within the trace contaminant removal system 16 or added to the load for the cabin CO₂ removal system 12.

In some embodiments, the trace contaminant removal system 16 includes a post processing LiOH bed 120 to react with acidic gases and remove them from the air stream. This LiOH bed 120 also scrubs CO₂, which as previously mentioned results from reacting the CO, and takes this load away from the trace contaminant removal system 16 or the CO₂ removal system 12.

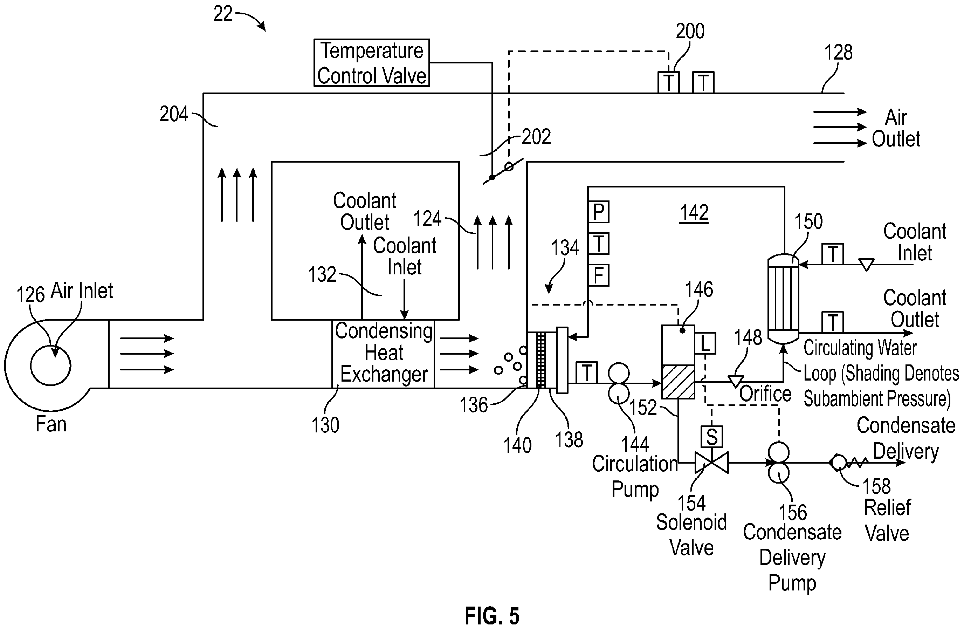

Referring now to FIG. 5, illustrated is an embodiment of the temperature and humidity control system 22. The temperature and humidity control system 22 conditions airflow of the habitat 10 by removal of excess humidity therefrom. The temperature and humidity control system 22 includes an airflow passage 124 having an airflow inlet 126 and an airflow outlet 128. A condensing heat exchanger 130 is located along the airflow passage 124 between the airflow inlet 126 and the airflow outlet 128. The condensing heat exchanger 130 is connected to a coolant loop 132 which circulates coolant through the condensing heat exchanger 130. At the condensing heat exchanger 130, moisture is condensed out of the airflow and is urged toward a water separator assembly 134 located downstream of the condensing heat exchanger 130.

The water separator assembly 134 includes a microporous hydrophilic membrane 136 located at the condensing heat exchanger 130 and a water cavity 138. In some embodiments the hydrophilic membrane 136 is formed from, for example, a polyethersulfone material. Other membrane materials may be utilized, including those that may require treatment to impart the desired hydrophilic properties. The hydrophilic membrane 136 and the water cavity 138 may be arranged in a stack with, in some embodiments, a membrane support 140 positioned between the hydrophilic membrane 136 and the water cavity 138. Condensate in the airflow leaving the condensing heat exchanger 130 seeps into the water cavity 138 through the hydrophilic membrane 136. In some embodiments, the water separator assembly 134 is located at a corner or other change in direction of the airflow passage 124 such that the condensate impinges onto the hydrophilic membrane 136.

The water separator assembly 134, more specifically the water cavity 138, is connected to a circulating water loop 142. The circulating water loop 142 circulates water at sub-ambient pressure to aid in urging condensate through the hydrophilic membrane 136 and into the water cavity 138. The circulating water loop 142 includes a circulation pump 144, a water accumulator 146, a metering orifice 148 and a liquid/liquid heat exchanger 150 arranged in series along the circulating water loop 142. Circulation of the water is driven by the circulation pump 144. Excess water volume is stored in the water accumulator 146, with the water accumulator 146 and the metering orifice 148 being utilized to maintain the selected sub-ambient pressure of the water in the circulating water loop 142. In some embodiments, a reference line extends from the accumulator 146 to the air flow 124 to help ensure that the proper differential pressure is maintained across the membrane 136.

Periodically, water may be removed from the circulating water loop 142 for further processing and/or use by the habitat 10. As such, a water outlet line 152 is connected to the water accumulator 146. Flow of water along the water outlet line 152 is controlled by a solenoid valve 154, an outlet pump 156 and a relief valve 158 arranged along the water outlet line 152.

In some embodiments, a temperature sensor 200 is located along the airflow passage 124 downstream of the condensing heat exchanger 130 to measure a temperature of the airflow. Since the condensing heat exchanger 130 and water separator 134 not only dehumidifies but also cools the airflow, in some instances the temperature of the airflow at the air outlet 128 may be lower than desired. To that end, the temperature and humidity control system 22 also includes a bypass passage 204 extending from the airflow passage 124. This bypass passage 204 is configured to direct a bypass portion of the airflow around the condensing heat exchanger 130 and water separator 134. The temperature sensor 200 is operably connected to a temperature control valve 202 located, in one embodiment, in the airflow passage 124 downstream of the water separator 134. The temperature control valve 202 is movable between an open position and a closed position to selectably direct more or less airflow through the bypass passage 204, to achieve a desired airflow temperature at the temperature sensor 200 and the air outlet 128. While in the embodiment illustrated the temperature control valve 202 is located downstream of the water separator 134, in other embodiments, the temperature control valve 202 may be positioned in other locations, such as upstream of the condensing heat exchanger 130 or in the bypass passage 204.

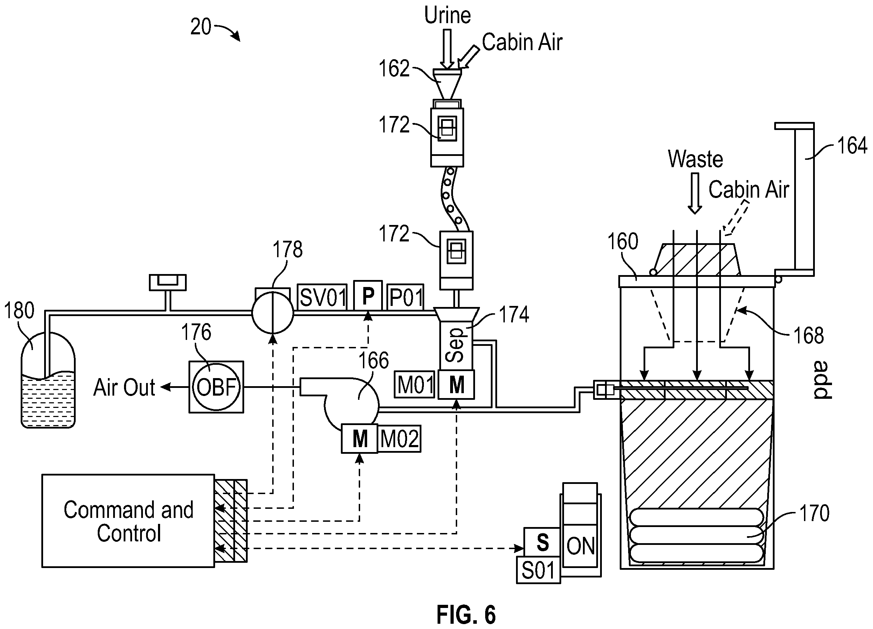

Referring now to FIG. 6, illustrated is an embodiment of a waste collection system 20, which includes a commode 160 and a urine funnel 162. When the system is activated, a commode fan 166 is activated to draw cabin air in through the commode 160 and the urine funnel 162. In some embodiments, the commode fan 166 is activated by raising a commode lid 164 and/or by moving the urine funnel 162 from a storage cradle (not shown). When utilizing the commode 160, the commode fan 166 draws feces into a feces bag 168 in the commode 160, which is then stored in a fecal cannister 170 in the commode 160.

When the urine funnel 162 is utilized, urine proceeds through one or more filters 172 and to a urine separator 174, where urine is separated from airflow. The airflow then passes through a bacterial filter 176 before being exhausted. The urine is urged from the urine separator 174 through a solenoid valve 178 and into a urine storage tank 180.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A space habitat, comprising:
a water processing assembly (14) for a space habitat including:
a wastewater tank (46) configured to store a volume of wastewater for processing;
a water processing section (48) connected to the wastewater tank, the water processing section including:
a pump (52) to urge flow of the wastewater through the water processing assembly;
a mostly liquid separator (50) configured to use centrifugal force to separate gas from liquid in the wastewater;
a catalytic reactor (68) located downstream of the mostly liquid separator and configured to remove volatile organics from the wastewater through oxidation at elevated temperature in an oxygen-rich environment; and
one or more sensors (54) located downstream of the catalytic reactor to determine if the wastewater is sufficiently processed; and
a three-way valve (56) configured to:
direct the wastewater to a water storage tank if the one or more sensors determine that the wastewater is sufficiently processed; and
direct the wastewater to the wastewater tank if the one or more sensors determine that the wastewater is not sufficiently processed; and
one or more of a carbon dioxide removal system (12), a trace contaminant removal system (16), a temperature and humidity control system (22) or a waste collection system (20).

2. The space habitat of claim 1, further comprising a particulate filter (62) disposed between the mostly liquid separator and the catalytic reactor, the particulate filter configured to remove solid contaminants from the wastewater.

3. The space habitat of claim 2, further comprising a multifiltration bed (64) disposed downstream of the particulate filter, the multifiltration bed configured to remove nonvolatile impurities from the wastewater.

4. The space habitat of any preceding claim, further comprising a membrane gas separator (82) downstream of the catalytic reactor, the membrane gas separator configured to remove free gas from the wastewater exiting the catalytic reactor.

5. The space habitat of any preceding claim, further comprising an ion exchange bed (82) disposed downstream of the catalytic reactor, the ion exchange bed configured to remove ionic components from the wastewater exiting the catalytic reactor.

6. The space habitat of any preceding claim, further comprising one or more heaters located upstream of the catalytic reactor to elevate a temperature of the wastewater entering the catalytic reactor, and optionally wherein the one or more heaters include one or more regenerative heat exchangers.

7. The space habitat of any preceding claim, further comprising a microbial check valve (92) disposed between the three-way valve and the wastewater tank to prevent wastewater from the wastewater tank from backflowing through the three-way valve.

8. A space habitat, comprising:
a carbon dioxide removal system (12), including:
two solid amine beds (24);
a first valve manifold (26) operably connected to a first end of each of the two solid amine beds;
a second valve manifold (28) operably connected to a second end of each of the two solid amine beds; and
a process controller (30) configured to:
selectably direct a process airflow (32) over a first solid amine bed (24) of the two solid amine beds; and
selectably operate a second solid amine bed (26) of the two solid amine beds in a regeneration mode to regenerate a carbon dioxide adsorption capacity of the second solid amine bed; and
one or more of a water processing assembly (14), a trace contaminant removal system (16), a temperature and humidity control system (22) or a waste collection system (20).

9. The space habitat of claim 8, wherein the carbon dioxide is removed from the process airflow via adsorption by the first solid amine bed.

10. The space habitat of claim 9, further comprising a cooling loop (34) operably connected to the first solid amine bed to remove the heat of adsorption from the first solid amine bed, and optionally wherein the cooling loop is connected to the first solid amine bed via the second valve manifold.

11. The space habitat of claim 8, wherein the second solid amine bed is regenerated by the application of vacuum and heat to the second solid amine bed.

12. The space habitat of claim 11, further comprising a vacuum source (38) operably connected to the second solid amine bed via the first valve manifold, and/or further comprising a heating loop operably connected to the second solid amine bed via the second valve manifold.

13. A space habitat, comprising:
a temperature and humidity control system (22), including:
an airflow passage (124) having an airflow inlet and an airflow outlet;
a condensing heat exchanger (130) disposed along the airflow passage through which an airflow is directed, the condensing heat exchanger configured to condense moisture out of the airflow; and
a water separator (134) located downstream of the condensing heat exchanger, the water separator including a microporous hydrophilic membrane to collect condensed moisture from the airflow; and
one or more of a water processing assembly (14), a carbon dioxide removal system (12), a trace contaminant removal system (16) or a waste collection system (20).

14. The space habitat of claim 13, further comprising a bypass passage (204) extending from the airflow passage upstream of the condensing heat exchanger to selectably direct at least a portion of the airflow to the airflow outlet without passing through the condensing heat exchanger and the water separator, and optionally further comprising a temperature control valve to control the airflow through the bypass passage.

15. The space habitat of claim 13 or 14, wherein the water separator is located at a corner or other change in direction of the airflow passage such that the condensed moisture impinges onto the hydrophilic membrane, and/or wherein the condensed moisture is urged through the hydrophilic membrane by a differential pressure across the hydrophilic membrane.
